Europäisches Patentamt

European Patent Office

Office européen des brevets

(11) Publication number: **0 449 182 A2**

# EUROPEAN PATENT APPLICATION

(21) Application number: 91104690.2

(22) Date of filing: 25.03.91

(51) Int. Cl.5: **B32B 9/04**, B32B 5/16, E04B 1/66

(30) Priority: 28.03.90 IT 6722390

(43) Date of publication of application:
02.10.91 Bulletin 91/40

(84) Designated Contracting States:
AT BE CH DE DK ES FR GB GR LI LU NL SE

(71) Applicant: SERVIZI ECOLOGICI S.p.A.
Corso Appio Claudio 229/5
I-10146 Torino(IT)

(72) Inventor: Faussone, Elio
Via Duca d'Aosta 25
I-14020 Cunico, Asti(IT)
Inventor: Bottero, Pier Andrea
Viale Giovanni XXIII
I-10092 Beinasco, Torino(IT)

(74) Representative: Modiano, Guido et al
MODIANO, JOSIF, PISANTY & STAUB
Modiano & Associati Via Meravigli, 16
I-20123 Milano(IT)

(54) Composite self-sealing membrane, particularly for the waterproofing of construction elements, pits, tanks and the like, and process for the manufacture thereof.

(57) The membrane includes at least one supporting layer (10) made of a waterproof and elastically yielding material and at least one intermediate granulated bentonite layer (12) which is interposed sandwich-like between the supporting layer and an external containment layer (13). A layer (11) of adhesive is advantageously interposed between the supporting layer (10) and the intermediate bentonite layer (12).

Fig. 1

The present invention relates to a continuous membrane which can be produced in rollable sheets of various widths which are compatible with appropriate transport and handling requirements, and which is particularly suitable for the waterproofing of construction elements in general, such as roofs, floor slabs, terraces, viaducts and the like, and for the lining of pits, tanks, canals, swimming pools and the like for waterproofing.

Sheet waterproofing materials are already known and widely used, and are applied on the surfaces to be waterproofed and mutually welded so as to form a truly continuous membrane which covers and seals the surface of the construction element, tank or the like to be waterproofed.

Laminated materials suitable for the purpose are generally based on thermoplastic resins or on elastomers or on products which derive from the combination of polymeric materials and elastomers.

Waterproofing materials are also known which are installed in the liquid state and which form the protective waterproofing membrane by hardening due to polymerization or hot curing or evaporation of the solvents.

Waterproofing membranes, applied in sheets or in the liquid state, are generally interposed between the surface to be waterproofed and the covering member of the construction element, for example between the floor slab and the walking surface, in the case of terraces, or between the ground and the lining panel, in the case of tanks, swimming pools, canals and the like.

Therefore, any yielding of the membrane or accidental laceration thereof during the execution of the member which covers it necessarily entails the removal of the covering member in order to restore said membrane, since otherwise, the damaged membrane would totally compromise the waterproofing.

It is evident that this is a severe disadvantage, on one hand, because it forces expensive restoration interventions, and on the other hand, because it forces the thickness of the membrane to be increased -- with a consequent increase in application costs -- in order to correspondingly increase its mechanical strength so as to avoid as much as possible any laceration thereof.

The aim of the present invention is to eliminate these disadvantages. The invention also has the important object of providing a self-sealing waterproofing membrane, i.e. a membrane which is capable of self-restoring its own waterproofing function in case of breakages or lacerations caused in any manner and in the presence of humidity.

Another object of the present invention is to provide a self-sealing waterproofing membrane which has a low cost, which can be obtained with continuous manufacturing processes, which can be rolled and therefore easily transported, which is easy to install, and which has self-supporting characteristics at least to an extent to facilitate the installation thereof on vertical walls or considerably sloping escarpments.

In order to achieve this aim, this object and others which will become apparent from the following detailed description, the present invention relates to a self-sealing composite membrane for waterproofing generic construction elements, pits, tanks and the like, characterized in that it is the result of the superimposition and mating of at least one supporting layer, made of waterproof and elastically yielding material, and of at least one intermediate layer of granulated bentonite which is interposed sandwich-like between said supporting layer and an external containment layer.

Advantageously, a resinous adhesive is interposed between the supporting layer and the granulated bentonite layer. The supporting layer preferably has a thickness comprised between 0.2 and 5 mm and is chosen within the following group of materials: thermoplastics, elastomers, and bitumens.

The resinous adhesive is constituted by synthetic resin. The intermediate bentonite layer has a thickness which is preferably comprised between 1 and 50 mm and a grain or particle mesh size comprised between 0 (zero) and 200.

The external containment layer is constituted by sheet material, such as fabric, felt and cardboards and the like made of natural or synthetic fibers.

In the membrane according to the invention, the intermediate layer of granulated bentonite performs the function of self-sealing element, in accordance with the stated aim and objects. In case of laceration of the supporting layer, by making contact with humidity, said layer in fact expands, with a volume increase having a ratio of approximately 3/1, and by penetrating among the flaps of the laceration it restores the continuity of the membrane at least in terms of waterproofing.

This property of the intermediate layer furthermore allows, as will become apparent hereinafter, to perform sealed joints by overlapping and welding the supporting layer of adjacent sheets of membrane after removing a marginal portion of the intermediate layer of one of the two sheets.

The composite self-sealing membrane according to the invention is advantageously obtained with a continuous manufacturing process which substantially comprises the following operating steps:
- advancement of the supporting layer by unrolling from rolls,
- deposition of the resinous adhesive on the supporting layer,
- deposition, on said adhesive, of the intermediate layer of bentonite, graduated in thickness by means of a distribution hopper,

- mating of the external containment layer,
- thermal irradiation of the resulting composite sheet, and
- re-rolling of the finished membrane.

Further purposes, characteristics and advantages will become apparent from the following detailed description and with reference to the accompanying drawings, which are given by way of non-limitative example and wherein:

figure 1 is an enlarged sectional view of a portion of the self-sealing composite membrane according to the present invention;

figure 2 is a diagram of an apparatus for manufacturing the membrane of figure 1;

figure 3 is a schematic perspective view of the method for installing the membrane;

figure 4 is a sectional view of the membrane which schematically illustrates the behavior of the intermediate layer in case of laceration of the supporting layer;

figure 5 is an enlarged sectional view, taken along the line V-V of figure 3, of the method for joining two contiguous membrane sheets by overlapping and welding.

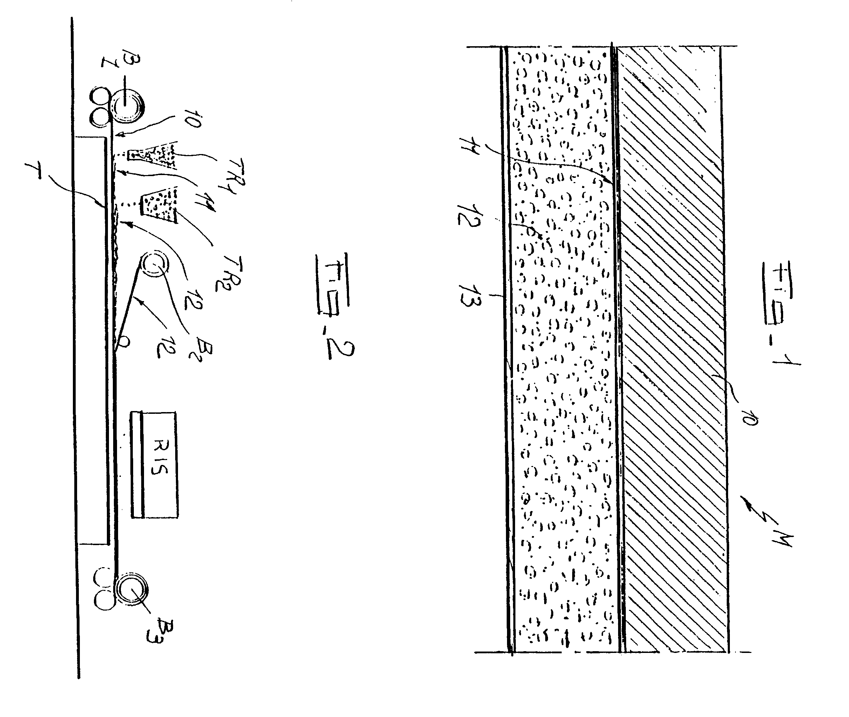

With reference to figure 1, the membrane M according to the invention substantially comprises a supporting layer 10 made of waterproof and elastically yielding material, a layer of resinous adhesive 11, an intermediate layer 12 of granulated bentonite and an external containment layer 13, so that the intermediate bentonite layer 12 is packed in a sandwich-like manner between the supporting layer 10 and the containment layer 13. Said sandwich-like arrangement, besides ensuring the containment of the granulated bentonite, increases the moment of inertia of the resisting cross-section, giving the finished membrane a degree of self-support which is sufficient to facilitate its installation on vertical walls or on considerably inclined escarpments.

The supporting layer 10, which is obtained by calendering, is chosen among the materials which have, simultaneously, waterproofing and elastic flexibility characteristics.

These requirements are met by thermoplastic polymeric materials in general, elastomeric materials, and bituminous materials, although these last do so to a reduced extent as regards flexibility, which is subject to decrease in the course of time.

Therefore, the material of the supporting layer 10 is chosen within the following group of materials:

- thermoplastics: polyvinyl chloride, low-, medium-, and high-density polyethylene, linear polyethylene and polypropylene
- elastomers: polyisobutylene, natural or synthetic rubber
- bitumens and bituminized fabrics.

The thickness of the supporting layer is variable, according to the material which composes it, from 0.2 to 5 mm; the lower thicknesses refer to elastomeric materials, the higher ones to bituminous materials.

The layer 11 of adhesive has a very low thickness, for example a film with a thickness comprised between 0.1 and 0.2 mm, and must set onto both the supporting layer and the interposed bentonite layer so as to retain a layer of bentonite granules which is substantially in contact with said supporting layer. Acrylic synthetic resinous adhesives, which can be applied to the supporting layer both in the liquid state and in powder form, have been found to be particularly suitable for the purpose.

The intermediate layer 12 is constituted by sodic or calcic bentonite, or by a mixture thereof, with a particle or grain mesh size comprised between 0 (zero) and 200, on the average 100, and its thickness varies from five to ten times that of the supporting layer 10 and is thus comprised between 1 and 50 mm, on the average 25 mm.

The final layer 13 performs, as mentioned, essentially the function of containment with respect to the intermediate bentonite layer 12, and for this purpose it is constituted by a sheet of fabric, felt or cardboard and the like.

The following materials have been found to be particularly suitable for the purpose: web of glass fibers, fabrics made of synthetic fiber (polyester, polypropylene), natural and/or synthetic non-woven fabric in tufts or continuous threads, jute, textile feltpaper.

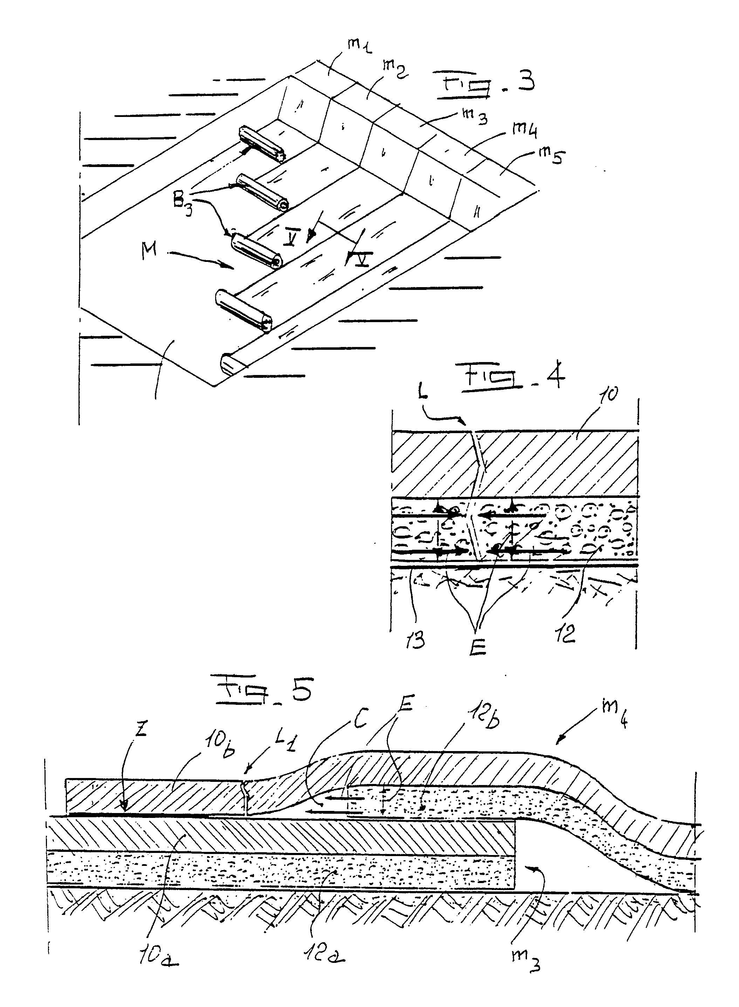

A composite membrane M is preferably obtained, according to the invention, starting from the calendered element which forms the supporting layer 10, by means of the continuous process illustrated in figure 2. The calendered element is unrolled from a roll B1 and conveyed onto a belt or roller conveyor T. The layer 11 of acrylic adhesive is applied on the exposed face of the calendered element 10 by means of a hopper TR1, if it is in powder form, or by means of sprayer nozzles, if it is in liquid form.

A second hopper TR2 performs the subsequent graduated deposition of the bentonite layer 12; the flow-rate of the hopper is adjusted according to the advancement rate of the calendered element 10 in order to achieve the deposition of a preset thickness. This is followed by the application of the final layer 13, which is also continuously unrolled from a roll B2.

The composite material which is the result of the preceding steps is then heated, by means of a radiating source RIS, for example an infrared-ray one, to a temperature of approximately 100°C and for a period comprised between 2 and 5 minutes, in order to dry the various components, and is subsequently rolled into rolls B3 ready for use.

Figure 4 illustrates the installation of the membrane M according to the invention on the walls of a pit F; said installation occurs by simply laying the unrolled sheets of the rolls B3. The waterproof supporting layer 10 is orientated to face in the direction from which water penetrates, i.e. upward in the case of the pit F. If a laceration L of the supporting layer 10 occurs (figure 4), the water reaches the bentonite layer 12, which expands as indicated by the arrows E and penetrates between the flaps of the laceration, thus restoring the continuity of the membrane in terms of waterproofing.

During the installation operations, the adjacent sheets m1, m2, m3, ... mn are partially overlapped after removing a marginal portion of the intermediate layer 12 from the sheet which is to overlap the adjacent one; for example, from the sheet m4 which overlaps the sheet m3.

A welding region Z is consequently defined (figure 5) and is characterized by the overlap and direct connection of the two supporting layers 10a-10b, which can thus be welded in a manner compatible with the nature of the material of which they are composed; for example, they can be heat-welded, in the case of supporting layers made of polymeric material, or cured, in the case of elastomeric supporting layers.

An expansion chamber C for the bentonite of the layer 12b of the sheet m4 is furthermore delimited in the overlap regions, so that by virtue of the expansion E tightness is ensured in case of a laceration of the supporting layer 10b, as indicated by L1, occurring in the overlap regions beyond the welding region Z.

The constructive details of the membrane and the steps of execution of the related manufacturing process may naturally be varied extensively with respect to what is described and illustrated by way of non-limitative example without altering the concept of the invention and without thereby abandoning the scope of said invention.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Self-sealing composite membrane, particularly for the waterproofing of construction elements, pits, tanks and the like, characterized in that it comprises at least one supporting layer (10) made of waterproof and elastically yielding material and at least one intermediate layer (12) of granulated bentonite interposed in a sandwich-like manner between said supporting layer (10) and an external containment layer (13).

2. Membrane according to claim 1, characterized in that a resinous adhesive (11) is interposed between the supporting layer (10) and the layer of granulated bentonite (12).

3. Membrane according to claims 1 and 2, characterized in that the supporting layer (10) has a thickness comprised between 0.2 and 5 mm.

4. Membrane according to the preceding claims, characterized in that the supporting layer (10) is chosen within the following group of materials: polyvinyl chloride, low-, medium- and high-density polyethylene, linear polyethylene, polypropylene, polyisobutylene, natural or synthetic rubber, bitumen, bituminized fabric.

5. Membrane according to the preceding claims, characterized in that the resinous adhesive (11) interposed between the supporting layer (10) and the granulated bentonite layer (12) is constituted by synthetic resin, especially acrylic resin.

6. Membrane according to the preceding claims, characterized in that the intermediate bentonite layer (12) has a thickness comprised between 1 and 50 mm and a grain or particle mesh size comprised between 0 (zero) and 200.

7. Membrane according to claim 6, characterized in that the intermediate layer (12) is constituted by sodic bentonite.

8. Membrane according to claim 6, characterized in that the intermediate layer (12) is constituted by calcic bentonite.

9. Membrane according to claim 6, characterized in that the intermediate layer (12) is constituted by a mixture of sodic and calcic bentonite.

10. Membrane according to claim 1 and any one of claims 2 to 9, characterized in that the external containment layer (13) is constituted by a material in sheets, chosen within the following group of materials: web of glass fibers; fabrics made of synthetic fiber (polyester, polypropylene); natural and/or synthetic non-woven fabric in tufts or continuous threads; jute; textile feltpaper.

11. Membrane according to claim 1, characterized in that it is the result of the assembly of a plurality of membrane sheets mutually connected by overlapping and welding the respective supporting layers (10) after removing a marginal portion of the intermediate layer (12) of the sheet which is to overlap.

12. Process for manufacturing the membrane according to claims 1 and 10, characterized in that it comprises the following operating steps:
    - advancement of the supporting layer (10) by unrolling from a roll (B1),
    - deposition of the resinous adhesive (11) on the supporting layer (10),
    - deposition, on said adhesive (11), of the intermediate layer (12) of bentonite, graduated in thickness by means of a distribution hopper (TR2),
    - mating of the external containment layer (13),
    - thermal irradiation (RIS) of the resulting composite sheet, and
    - re-rolling of the finished membrane (B3).

13. Process according to claim 12, characterized in that said thermal irradiation is performed at a temperature comprised between 90 and 120°C and is performed for a period comprised between 2 and 5 minutes.

FIG_1

FIG_2

Fig. 3

Fig. 4

Fig. 5